# EUROPEAN PATENT APPLICATION

(11) **EP 1 459 808 A2**
(43) Date of publication of application: **22.09.2004**
(21) Application number: 04006052.7
(22) Date of filing: 15.03.2004
(51) Int. Cl.: B05C 11/10

(54) **Method of implementing multiple pump speeds for dispensing a viscous material**

(30) Priority: 19.03.2003 US 392189
(71) Applicant: NORDSON CORPORATION, Westlake, Ohio 44145-1119 (US)
(72) Inventor: Lewis, Alan, Carlsbad California 92008 (US); Ratledge, Thomas Laferl, San Marcos California 92069 (US); Nagano, Naoya Ian, Oceanside California 92056 (US); Giusti, Christopher L., San Marcos California 92069 (US); Anit, Alexander Lupisan, Vista California 92083 (US)
(74) Representative: Eisenführ, Speiser & Partner

(57) **Abstract**

The invention describes a method of operating a viscous material dispensing system (10) for dispensing viscous material from a movable dispensing element (20) for semiconductor packaging, the dispensing element (20) receiving viscous material from a pump (26) capable of supplying viscous material at multiple pump speeds, comprising the steps of: selecting a first pump speed for providing viscous material from a pump (26) to a dispensing element; determining a first dispensing characteristic from a first output characteristic at the first pump speed; selecting a second pump speed for providing viscous material from the pump to the dispensing element; and determining a second dispensing characteristic from a second output characteristic at the second pump speed.

## Description

### Field of the Invention

This invention relates generally to semiconductor packaging and, more particularly, to dispensing a viscous material for semiconductor packaging.

### Background of the Invention

In the microelectronics industry, packages are formed from components, such as dies, are mounted on a component carrier, such as a substrate, a printed circuit board, or a leadframe. Electrically-conductive bond pads on each component are electrically coupled with corresponding electrically-conductive solder balls or bumps on a component carrier. The solder bumps of each component are registered with the corresponding bond pads on the component carrier and a reflow process is applied to create solder joints that serve as electrical connections. The electrical connections introduce a gap between each component and the component carrier.

The reliability of the electrical connections is improved by filling the gap with a viscous material, such as an underfill or encapsulant material, that is later cured to form an adhesive joint. Conventional non-contact underfilling methods typically dispense the viscous material from a movable dispenser in the form of a bead having line segments near one or more peripheral side edges of the component. Viscous material is pumped from a fluid reservoir to a dispenser element of the dispenser by a valve or pump operating at a single valve or pump speed. The flow rate of viscous material from the dispenser element for a given pump speed is calibrated by, for example, measuring the mass or weight of viscous material dispensed from the dispenser. Using the calibrated flow rate, the x-y directional speed substantially parallel to the component carrier or line speed is altered to vary the dispensed volume per unit length or linear density. Capillary forces induce movement of the encapsulant material from the peripheral side edges of the component into the gap.

A challenging situation arises if multiple beads of viscous material are to be dispensed with significantly different linear densities. This situation is encountered, for example, if underlining multiple components of significantly different geometrical dimensions and/or gaps mounted to a single component carrier, as frequently encountered when underfilling Multi-Chip Modules (MCM's). A bead length and a weight or volume of viscous material, which may also be expressed as a linear density or weight per unit length, characterizes each bead. Generally, the process time required to dispense beads of relatively-high linear density may be minimized by selecting a single relatively-high pump speed (i.e., flow rate output). However, the line speed must be increased dramatically for depositing beads of relatively-low linear density at that single relatively-high pump speed. The line speed cannot exceed a maximum dispensable line speed at which quality-reducing effects, such as inconsistent wetting, stringing, and splatter, appear. Therefore, an upper limit is imposed on the pump speed by the maximum dispensable line speed. It follows that the utilization of a single pump speed while varying line speed effectively reduces the throughput of the underfilling operation when dispensing multiple beads of viscous material with a wide range of linear densities.

Another challenging situation arises if the MCM incorporates multiple components each housed inside its own radio-frequency (RF) shield. Shielded components are underfilled by dispensing low-viscosity viscous material through openings perforating the RF shield. The dispensing element dispenses discrete deposits or dots of viscous material about the periphery of the shielded component into at least one of the openings while the dispensing element is held stationary. When dispensing discrete deposits of viscous material, the amount of time that the pump is turned on or on-time is altered to vary the dispensed volume.

If at least two of the shielded components require significantly different amounts of viscous material for underfilling, dispensing both weights at a single pump speed may be inefficient. For example, one shielded component may require a weight of 1 milligram and another larger shielded component may require a weight of 100 milligrams. A pump speed optimized for dispensing discrete deposits of larger weights may be inappropriate for dispensing discrete deposits of smaller weights, as the time required for dispensing the smaller weight is too brief in relation to the pump response time. At any pump speed, the pump response time defines a minimum weight that can be dispensed accurately at that particular pump speed. The pump response time drops as the pump speed drops. Therefore, slower pump speeds are appropriate for dispensing smaller weights. However, dispensing at a slower pump speed reduces the throughput of the underfilling operation as the time for dispensing the larger weights is lengthened.

It would therefore be desirable to provide a manner of more efficiently dispensing multiple beads of viscous material having significantly different line densities or dispensing multiple discrete deposits of viscous material having significant variations in the dispensed amounts.

### Summary of the Invention

The present invention overcomes the foregoing and other shortcomings and drawbacks of underfill methods heretofore known. While the invention will be described in connection with certain embodiments, it will be understood that the invention is not limited to these embodiments. On the contrary, the invention includes all alternatives, modifications and equivalents as may be included within the spirit and scope of the present invention.

Generally, the invention relates to a method for underfilling components, such as dies, carried on a component carrier, such as a printed circuit board, although the invention is not so limited. The principles of the invention are applicable to any component mounted to a component carrier in which a gap or space is present in the mounted assembly. For example, the principles of the invention are applicable to underfilling any surface-mounted or throughhole-mounted assembly. Multiple pumps speeds are selected and calibrated. Multiple beads of different length characteristics may be programmed. Any bead of viscous material are programmed with a unique dispense weight and each bead can select from among the calibrated pump speeds. A line speed is determined based upon the specified bead length, dispense weight, and pump speed, limited by the ability to dispense at the line speed. Alternatively, a pump on-time may be determined from the dispense weight and pump speed for dispensing viscous material from a stationary dispensing element.

According to the invention, a method is provided for operating a viscous material dispensing system. The method includes selecting first and second pump speeds for operating a pump to dispense viscous material from a dispensing element at corresponding first and second output characteristics, respectively, and determining first and second dispensing characteristics, such as line speeds for moving the dispensing element or on-times for operating the pump, from the first and second output characteristics, respectively.

In another embodiment of the invention, a method is provided for dispensing viscous material. The method includes specifying first and second pump speeds for supplying viscous material from a pump to a dispensing element. The method further includes moving the dispensing element at a first line speed while operating a pump at the first pump speed to dispense viscous material from the dispensing element, and moving the dispensing element at a second line speed while operating the pump at the second pump speed to dispense viscous material from the dispensing element.

In another embodiment of the invention, a method is provided for dispensing multiple beads of viscous material onto a component carrier. The method includes determining an output characteristic for a pump at each of a plurality of pump speeds while operating a pump to dispense viscous material. For each of the multiple beads of viscous material, one of the plurality of pump speeds is selected and a line speed is determined based upon the output characteristic corresponding to the selected pump speed. Each of the multiple beads of viscous material is dispensed by moving a dispensing element relative to the component carrier at the corresponding line speed while operating the pump at the selected pump speed to dispense viscous material from the dispensing element.

The above and other objects and advantages of the present invention shall be made apparent from the accompanying drawings and the description thereof.

### Brief Description of the Drawings

The accompanying drawings, which are incorporated in and constitute a part of this specification, illustrate embodiments of the invention and, together with a general description of the invention given above, and the detailed description of the embodiments given below, serve to explain the principles of the invention.
Fig. 1 is a diagrammatic view of a viscous material dispensing system in which the dashed connecting lines represent mechanical connections and the solid connecting lines represent electrical connections;
Fig. 2 is a logic flow diagram illustrating the operation of the viscous material dispensing system of Fig. 1 for pump speed calibration according to the principles of the invention;
Fig. 3 is a logic flow diagram illustrating the operation of the viscous material dispensing system of Fig. 1 for underfill volume control according to the principles of the invention; and
Fig. 4 is a logic flow diagram similar to Fig. 3 illustrating the operation of the viscous material dispensing system for underfill volume control according to an alternative embodiment of the invention.

### Detailed Description of the Preferred Embodiments

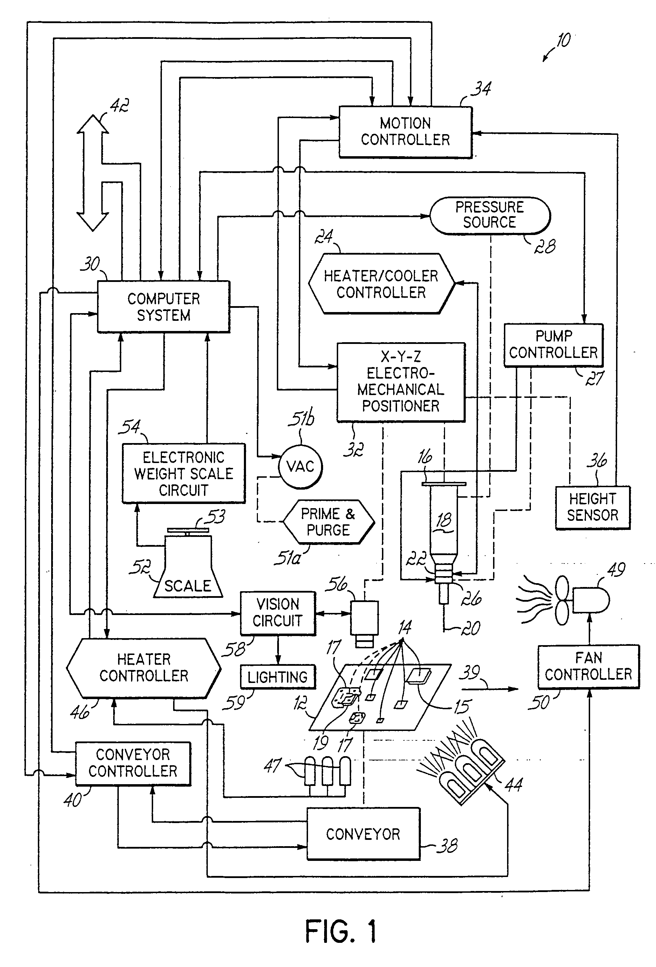

With reference to Fig. 1, a viscous material dispensing system, generally indicated by reference numeral 10, is provided for dispensing viscous material, such as an underfill material or an encapsulant, onto a component carrier 12 carrying multiple components 14, such as a printed circuit board carrying multiple die. Dispensing system 10 is particularly useful for dispensing beads 15 of viscous material adjacent to side edges of each component 14 so that the viscous material moves or flows by capillary action, or with the assistance of vacuum, into the gap between the component carrier 12 and component 14 for encapsulating electrical connections extending therebetween.

At least two of the components 14 carried by component carrier 12 have different geometrical dimensions. However, the principles of the invention are generally applicable for any dispensing application in which two or more beads 15 of viscous material have significantly different volume per unit length or linear density requirements. For example, two of the beads 15 may be dispensed for underfilling a single component 14. Similarly, the invention contemplates providing two or more beads 15 of viscous material having significantly different line densities to two separate components 14 carried by separate component carriers 12.

Dispensing system 10 includes a dispenser 16 having a fluid reservoir 18 and a dispensing element 20 capable of receiving viscous material from the fluid reservoir 18. Beads 15 of viscous material are dispensed from a discharge orifice present in a tip of dispensing element 20 onto component carrier 12. Surrounding a portion of the dispensing element 20 and coupled with a heater/cooler controller 24 may be a heat sink 22 equipped with heating, cooling and temperature sensing elements (not shown). Positioned between the fluid reservoir 18 and the dispensing element 20 is a pump 26 that operates as a positive displacement pump for transferring metered volumes of viscous material from the fluid reservoir 18 to the dispensing element 20. Pump 26 is capable of highly accurate volumetric dispensing in which the dispensed volumes of viscous material are predictable and reproducible. Computer system 30 controls the dispensing of viscous material in accordance with a stored operation program. Operation of pump 26 is regulated by a pump controller 27, which receives command or control signals from a computer system 30. Typically, the headspace above the viscous material residing in fluid reservoir 18 is pressurized by a source of pressurized air 28, which is also controlled by command or control signals from computer system 30.

With continued reference to Fig. 1, dispenser 16 is mounted to a three-axis electromechanical positioner 32 for three-dimensional movement relative to component carrier 12. In particular, electromechanical positioner 32 moves dispensing element 20 at a line speed or x-y movement speed relative to the component carrier 12. Typically, the separation between the tip of the dispensing element 20 and the component carrier 12 in the z-direction is maintained substantially constant and the tip of the dispensing element 20 is moved in an x-y plane substantially parallel to the surface of the component carrier 12. The electromechanical positioner 32 is interfaced with a motion controller 34, which is controlled by command or control signals from computer system 30. Generally, the range of available line speeds is limited by the physical motion capabilities of the electromechanical positioner 32 and the maximum dispensable line speed at which the bead 15 can be dispensed onto the component carrier 12 while maintaining adequate bead quality. A height sensor 36 detects the vertical separation of dispensing element 20 from component carrier 12 for regulating the dispensing height.

Computer system 30 provides movement control signals to the motion controller 34, which directs the electromechanical positioner 32 for moving dispenser 16 and dispenser element 20 at a line speed for depositing each of the lines 15 onto the component carrier 12 patterned in a dispense path or style and originating at a dispensing location. The computer system 30 may be linked with other equipment via communications busses 42 for coordinating operation of a production line.

With continued reference to Fig. 1, a conveyer 38 transports the component carrier 12, and a plurality of similar component carriers 12, beneath the dispensing element 20, as indicated generally by horizontal arrow 39. Operation of conveyer 38 is controlled by a conveyer controller 40, which receives command or control signals from computer system 30. Component carrier 12 may be heated by a heat source 44 that is energized by a heater controller 46. The temperature of the component carrier 12 is sensed by heat sensors 47, which provide temperature information to the heater controller 46. A blower 49 controlled by a fan controller 50, which is interfaced with computer system 30, cools the component carrier 12.

A prime and purge station 51a of dispensing system 10 is with coupled with a vacuum source 51b controlled by computer system 30. Before a dispensing operation or after a lengthy idle period, a prime and purge procedure is performed to eliminate air pockets present in the viscous material initially residing within dispensing element 20 and pump 26.

With continued reference to Fig. 1, dispensing system 10 may include a weight scale 52 is interfaced with computer system 30 by an electronic weight scale circuit 54. A receptacle 53 of the weight scale 52 is configured for capturing viscous material dispensed from the dispenser 16 during pump speed calibration. To that end, dispenser 16 is moved to weight scale 52 by electromechanical positioner 32 and viscous material is deposited onto the receptacle 53 by operating pump 26. For example, the dispenser 16 may be operated for a predetermined dispensing time or on-time, representing the time for which the dispenser 16 operates for pumping viscous material from dispensing element 20. The weight measured by weight scale 52 is provided via the electronic weight scale circuit 54 to computer system 30. The output of viscous material corresponding to the pump speed is determined using the weight-from weight scale 52. The calibrated pump speeds utilized by the computer system 30 for programming the dispensing of beads 15.

A camera 56, a vision circuit 58 interfaced with camera 56, and a lighting unit 59 may cooperate to provide a vision system capable of precisely locating the dispensing element 20 relative to at least one peripheral edge of each component 14. Lighting unit 59 illuminates the component carrier 12 so that the camera 56 can image the component carrier 12, the components 14, and any fiducial marks. The vision circuit 58 communicates with computer system 30 for transferring information and digital images of the component carrier 12 and components 14 to computer system 30. The computer system 30 may utilize a pattern recognition system for calculating the dimensions and orientation of each component 14.

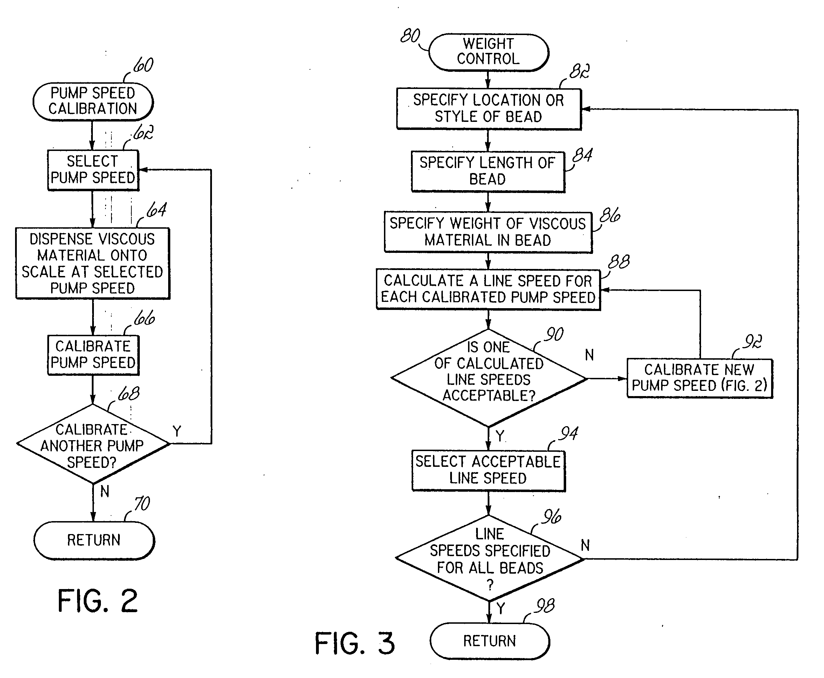

With reference to Fig. 2, the logical flow of the operation of the dispensing system 10 (Fig. 1) in accordance with the principles of the invention will be described for calibrating a set of pump speeds from among the multiple pump different speeds at which pump 26 may operate. In block 60, during the set-up for a dispensing process, computer system 30 initiates and controls a routine for establishing the set of calibrated pump speeds. In block 62, the motion controller 34 actuates the electromechanical positioner 32 for moving the dispenser 16 so that the dispensing element 20 is positioned for dispensing viscous material onto the receptacle 53 of weight scale 52. In block 64, pump 26 is operated at one of the pump speeds, selected from among the set of substantially constant pump speeds to be calibrated, for an on-time to dispense viscous material from dispenser element 20 onto the receptacle 53. The amount of viscous material dispensed during the on-time is weighed by the weight scale 52.

In block 66, the pump speed is calibrated by determining an output characteristic relating to the measured weight. For example, the output characteristic may be a flow rate determined from the weight of viscous material and the on-time for which the pump was operated at the selected pump speed. The pump speed and corresponding output characteristic are stored, such as by computer system 30 as one correlated data pair in a database, for subsequent reference and use in implementing underfill volume control In block 68, it is determined whether another pump speed from among the set of pump speeds remains to be calibrated. If additional pump speeds are to be calibrated, block 68 passes control back to block 62 and blocks 62, 64, and 66 are repeated to calibrate each pump speed in the set. If all of the pump speeds have been calibrated, block 70 passes control back to the dispensing operation set-up routine being executed by the computer system 30.

The invention contemplates that, instead of measuring the weight as a function of the on-time to provide a flow rate, other output characteristics of pump 26 may be determined. For example, pump 26 may be operated at a pump speed expected to dispense an amount of viscous material equivalent to a predicted weight onto receptacle 53. The actual dispensed amount of viscous material is weighed by weight scale 52 and then compared with the predicted weight. In an iterative process, the pump speed of pump 26 may be varied, while holding the pump on-time constant, until the actual and predicted weights of viscous material coincide.

In an alternative embodiment, a volume of viscous material may be measured, rather than weight, to quantify dispensed amounts of viscous material for calibrating the set of pump speeds. For example, a line of viscous material may be dispensed onto a first glass plate and covered by a second glass plate separated from the first glass plate by a spacer of a known height. The line is visible through the second glass plate. The perimeter of the line may be measured and an area determined therefrom by a calculation. A dispensed volume is then determined from the area and spacer height.

With reference to Fig. 3, the logical flow of the operation of the dispensing system 10 (Fig. 1) in accordance with the principles of the invention for implementing underfill volume control using the calibrated pump speeds will be described. In block 80, computer system 30 initiates and controls a routine for selecting one of the calibrated pump speeds (Fig. 2) and a corresponding line speed for each bead 15 of viscous material to be dispensed onto component carrier 12. In block 82, the location or origin and the dispensing path or style of one of the beads 15 is specified. The origin and dispensing path may be specified, for example, from mapped component location data and/or from coordinates derived from a digital image of the component carrier 12 and components 14. The dispensing path of each bead 15 may be defined by one or more individual line segments arranged about one or more side edges of the corresponding one of the components 12. As some examples, the dispensing path may be: 1) one line segment at one side edge of component 14; or 2) two aligned, spaced-apart line segments at one side edge of component 14; or 3) two line segments arranged in an L-shaped path about two contiguous side edges of component 14; or 4) three line segments arranged in a U-shaped path about three side edges of component 14; or 5) four line segments encircling component 14; or any other combination of line segments desired for a particular application. Each of the components 14 may receive more than one bead 15. For example, a component 14 may receive a first bead 15 dispensed in a linear path along one side edge followed by a second bead 15 dispensed in a U-shaped path extending along the other three side edges, in which the volume of viscous material and the linear density may differ significantly for the first and second beads 15.

In block 84, a length is specified for the bead 15 of viscous material to be deposited from dispenser 16 adjacent to one or more peripheral side edges of component 14. In block 86, a weight of viscous material is specified for the bead 15 and, in block 88, a dispensing characteristic or line speed for moving dispenser 16 is determined or calculated for each pump speed of pump 26 that was previously calibrated (Fig. 2). For example, each line speed may be calculated as a quotient whose dividend is the bead length and whose divisor is the movement time given by the weight divided by the corresponding flow rate. The line speed represents a linear velocity in the x-y plane at which the motion controller 34 and electromechanical positioner 32 must move dispenser 16 and dispensing element 20 in a path relative to the component carrier 12 according to the dispensing path of bead 15.

The invention contemplates that each individual bead 15 may be deposited by coordinating different calibrated pump speeds and corresponding line speeds over the bead length. In particular, multiple different pump speeds and corresponding line speeds may be selected to provide a substantially constant weight or volume per unit length over the entire length of bead 15. For example, bead 15 may be dispensed over part of its length by operating the pump 26 at one of the calibrated pump speeds and moving the dispensing element 20 at the corresponding line speed and over the remainder of its length by operating the pump 26 at a faster calibrated pump speed and moving the dispensing element 20 at a slower corresponding line speed, in which each pump speed and line speed combination are coordinated to provide a substantially constant weight or volume per unit length along the bead length.

In an alternative embodiment of the invention, the linear density may be varied along the length of bead 15 by coordinating the calibrated pump speeds and line speeds. For example, in an L-shaped bead 15 having two linear segments of significantly different individual line densities, the dispensing time may be optimized by specifying one of the calibrated pump speeds and its corresponding line speed for dispensing one segment and a different one of the calibrated pump speeds and its corresponding line speed for dispensing the other linear segment, in which each pump speed and line speed combination provides different volumes per unit length for each linear segment.

In block 90, a user of the system 10 views the calculated line speeds and determines whether one of the line speeds is acceptable when compared with a range of physically available line speeds and/or a maximum line speed. If none of the calculated line speeds is acceptable, block 90 passes control to block 92. Block 92 passes control back to the pump speed calibration of Fig. 2, an output characteristic is determined for a new pump speed, and control is subsequently returned to block 88. If one of the line speeds is acceptable, block 90 passes control to block 94 in which the acceptable line speed is specified for moving the dispensing element 20 to dispense bead 15. The selected line speed is contingent upon achieving an acceptable bead quality and an optimal process throughput. In other words, the acceptable line speed must be within the linear velocity capability of the electromechanical positioner 32 and must not exceed a maximum linear velocity above which the viscous material is unable to wet the component carrier 12. Generally, the acceptable line speed selected for each bead 15 is the fastest available line speed, in view of the preceding physical limitations, for purposes of optimizing process throughput.

In block 96, it is determined whether line speeds have been specified for all beads 15. If not, control is transferred from block 96 back to block 82 and at least blocks 82, 84, 86, 88, 90 and 94 are repeated. If a line speed has been specified for all beads 15, control is transferred from block 96 to block 98, which returns to the calling program executing on computer system 30 for programming any remaining parameters and performing the dispensing operation.

In use, the dispenser 16 and the dispensing element 20 of dispensing system 10 are positioned relative to the weight scale 52 for dispensing viscous material onto the receptacle 53. The pump controller 27 operates the pump 26 at one of the set of pump speeds to be calibrated to dispense viscous material from the dispensing element 20. The weight scale 52 weighs the dispensed volume of viscous material and an output characteristic is determined from the measured weight. For example, a flow rate may be determined from the weight and the on-time of the pump 26. This procedure is repeated for each pump speed to be calibrated. Thereafter, at least one line speed and at least one calibrated pump speed is associated with each bead 15.

The beads 15 are then sequentially dispensed by dispensing system 10 onto the component carrier 12. Specifically, for each bead 15, the tip of dispensing element 20 is positioned at a characteristic height above component carrier 12 and at a specified location relative to the edge of the corresponding component 14. The pump 26 is operated at the pre-selected calibrated pump speed or pump speeds and the dispensing element 20 of dispenser 16 is simultaneously moved relative to the component carrier 12 at the corresponding pre-selected line speed or line speeds.

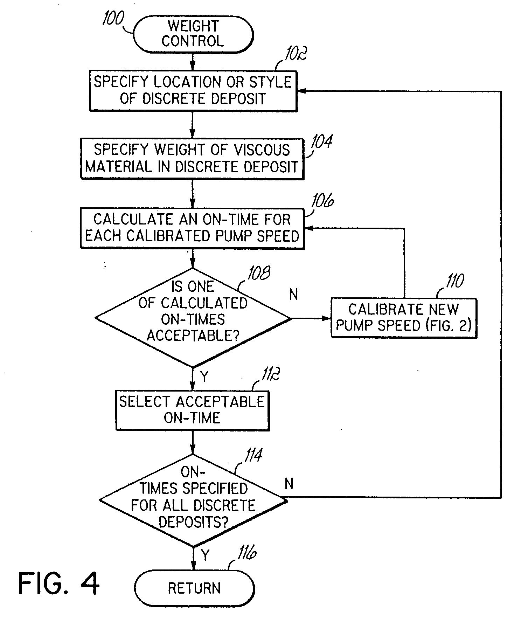

With renewed reference to Fig. 1, two or more of the components 14 on component carrier 12 may be shrouded by a radiofrequency (RF) shield 17 perforated by holes capable of receiving one or more discrete deposits 19 of viscous material. The dispensing element 20 is positioned by electromechanical positioner 32 relative to the holes in the RF shield 17 for dispensing a weight of underfill material into the enclosed volume, which flows beneath the component 14. The invention contemplates, as depicted in Fig. 1, that the component carrier 12 may carry components 14 lacking shielding and components 14 covered by RF shields 17. The invention further contemplates that underfill volume control using the calibrated pump speeds may be implemented for underfilling a combination of both component arrangements using the processes of Figs. 3 and 4, respectively.

With reference to Fig. 4, the logical flow of the operation of the dispensing system 10 (Fig. 1) in accordance with an alternative embodiment of the invention for implementing underfill volume control using the calibrated pump speeds for dispensing multiple different discrete volumes 19 will be described. In block 100, computer system 30 initiates and controls a routine for selecting one of the calibrated pump speeds (Fig. 2) and a corresponding dispensing characteristic or on-time for each discrete deposit 19 of viscous material to be dispensed onto component carrier 12. In block 102, the location or style of one of the discrete deposits 19 is specified. Each of the components 14 may receive more than one discrete deposit 19. In block 104, a weight of viscous material is specified for the discrete deposit 19. In block 106, an on-time for operating pump 26 is calculated or determined for each pump speed of pump 26 that was previously calibrated (Fig. 2).

In block 108, a user of the system 10 views the calculated on-times and determines whether one of the on-times is acceptable when compared with a range of physically available on-times and/or a minimum on-time. If none of the calculated on-times is acceptable, block 108 passes control to block 110. Block 110 passes control back to the pump speed calibration of Fig. 2, an output characteristic is determined for a new pump speed, and control is subsequently returned to block 106. If one of the on-times is acceptable, block 108 passes control to block 112 in which the acceptable on-time is specified for operating the pump 26 for dispensing discrete weight 19. The selected on-time is contingent upon being greater than a characteristic pump response time at the selected pump speed that is required to initiate and discontinue flow.

In block 114, it is determined whether an on-time has been specified for all discrete deposits 19. If not, control is transferred from block 114 back to block 102 and at least blocks 102, 104, 106, 108 and 112 are repeated. If an on-time has been specified for all discrete deposits 19, control is transferred from block 114 to block 116, which returns to the calling program executing on computer system 30 for programming any remaining parameters and performing the dispensing operation.

According to the principles of the invention, multiple different pump speeds may be programmed for causing a single pump to dispense multiple beads of viscous material having significantly different volumes per unit length or discrete weights of viscous material at different pump speeds. The ability to program multiple different pump rates dramatically reduces the time required to underfill differently-sized components mounted on a single component carrier as the flow rate and line speed can be optimized relative to weight or linear density. As a result, overall dispense times are significantly reduced and process throughput is significantly increased, as compared to conventional dispensing systems in which the pump operates at a single pump speed. The ability to select from among multiple different pump speeds provides the ability to optimize the flow rate for the linear density of each individual bead or the weight of each discrete deposit.

While the present invention has been illustrated by a description of various embodiments and while these embodiments have been described in considerable detail, it is not the intention of the applicants to restrict or in any way limit the scope of the appended claims to such detail. Additional advantages and modifications will readily appear to those skilled in the art. The invention in its broader aspects is therefore not limited to the specific details, representative methods, and illustrative examples shown and described. Accordingly, departures may be made from such details without departing from the spirit or scope of applicants' general inventive concept.

## Claims

1. A method of operating a viscous material dispensing system for dispensing viscous material from a movable dispensing element for semiconductor packaging, the dispensing element receiving viscous material from a pump capable of supplying viscous material at multiple pump speeds, comprising the steps of:
selecting a first pump speed for providing viscous material from a pump to a dispensing element;
determining a first dispensing characteristic from a first output characteristic at the first pump speed;
selecting a second pump speed for providing viscous material from the pump to the dispensing element; and
determining a second dispensing characteristic from a second output characteristic at the second pump speed.

2. The method of claim 1 **characterized in that** the first dispensing characteristic is a first line speed for moving the dispensing element, and further comprising the step of:
operating the pump at the first pump speed to dispense viscous material while moving the dispensing element at the first line speed.

3. The method of claim 2 **characterized in that** the second dispensing characteristic is a second line speed for moving the dispensing element, and further comprising the step of:
operating the pump at the second pump speed to dispense viscous material while moving the dispensing element at the second line speed.

4. The method of any of the above claims **characterized in that** the first dispensing characteristic is a first on-time for operating the pump, and further comprising the step of:
operating the pump at the first pump speed for the first on-time to dispense viscous material.

5. The method of claim 4 **characterized in that** the second dispensing characteristic is a second on-time for operating the pump, and further comprising:
operating the pump at the second pump speed for the second on-time to dispense viscous material.

6. The method of claim 1 further comprising at least one of the following:
a) dispensing viscous material at the first pump speed on a weight scale and using a first weight measured by the weight scale to determine the first output characteristic; and
b) dispensing viscous material at the second pump speed on the weight scale and using a second weight measured by the weight scale to determine the second output characteristic.

7. The method of claim 6 **characterized in that**:
the dispensing element is operated for an on-time to dispense the viscous material on the weight scale; and wherein the
determining of the first output characteristic includes using the first weight in conjunction with the on-time.

8. The method of claim 6 **characterized in that**:
the dispensing element is operated for an on-time to dispense the viscous material on the weight scale; and wherein the
determining of the second output characteristic includes using the second weight in conjunction with the on-time.

9. The method of claim 6 further comprising at least one of the following:
a) determining a first flow rate from the first weight of viscous material dispensed at the first pump speed and utilizing the first flow rate to determine the first line speed; and
b) measuring a second flow rate from the second weight of viscous material dispensed at the second pump speed and utilizing the second flow rate to determine the second line speed.

10. A method of dispensing multiple beads of viscous material onto a component carrier from a movable dispensing element for semiconductor packaging, the dispensing element receiving viscous material from a pump capable of supplying viscous material at a plurality of pump speeds, comprising:
determining an output characteristic for a pump at each of a plurality of pump speeds while operating the pump to dispense viscous material;
for each of the multiple beads of viscous material, selecting one of the plurality of pump speeds;
for each of the multiple beads of viscous material, determining a line speed based upon the output characteristic corresponding to the selected pump speed; and
for each of the multiple beads of viscous material, moving a dispensing element relative to the component carrier at the corresponding line speed while operating the pump at the selected pump speed to dispense viscous material from the dispensing element.

11. The method of claim 10 wherein a plurality of components are mounted to the component carrier and each of the plurality of components is spaced from the component carrier by one of a corresponding plurality of gaps, and further comprising:
moving each of the multiple beads of viscous material into one of the plurality of gaps between a corresponding one of the plurality of components and the component carrier.

12. The method of claim 11 wherein the moving of the multiple beads of viscous material further comprises:
moving at least two of the multiple beads of viscous material into the same gap.

13. The method of claim 10 wherein the determining of the flow rate at each of the plurality of pump speeds further comprises:
dispensing viscous material at a corresponding one of the pump speeds;
measuring a dispensed weight of viscous material; and
determining the corresponding output characteristic using the weight.

14. The method of claim 10 wherein at least two of the multiple beads of viscous material are dispensed at different pump speeds.

15. The method of claim 10 further comprising:
for each of the multiple beads of viscous material, determining a line speed from the output characteristic at each of the plurality of pump speeds before selecting one of the plurality of pump speeds; and
wherein the pump speed selection is based upon the line speed.

16. The method of claim 10 wherein the moving of the dispensing element relative to the component carrier further comprises:
for each of the beads of viscous material, moving the dispensing element at the determined line speed while the pump is operating at the corresponding selected one of the plurality of pump speeds.

17. A method of dispensing second and second beads of viscous material onto a component carrier from a movable dispensing element, the dispensing element receiving viscous material from a pump capable of supplying viscous material at least second and second pump speeds, comprising:
specifying a first weight and a first dispensing path for a first bead of viscous material;
specifying a second weight and a second dispensing path for a second bead of viscous material;
determining a first output characteristic of viscous material dispensed from the dispensing element at the first pump speed;
determining a second output characteristic of viscous material dispensed from the dispensing element at the second pump speed;
determining a first line speed from the first output characteristic, the first weight, and the first dispensing path;
determining a second line speed from the second output characteristic, the second weight, and the second dispensing path;
operating the pump at the first pump speed while moving the dispensing element relative to the component carrier at the first line speed over the first dispensing path to dispense the first bead of viscous material; and
operating the pump at the second pump speed while moving the dispensing element relative to the component carrier at the second line speed over the second dispensing path to dispense the second bead of viscous material.

18. The method of claim 17 further comprising:
moving the first bead of viscous material and the second bead of viscous material into a gap between a component and the component carrier.

19. The method of claim 17 further comprising:
moving the first bead of viscous material into a first gap between a first component and the component carrier; and
moving the second bead of viscous material into a second gap between a second component and the component carrier.

20. The method of claim 17 wherein the determining of the first output characteristic further comprises:
dispensing viscous material at the first pump speed onto a weight scale;
measuring a first weight of dispensed viscous material; and
determining the first output characteristic using the first weight; and
wherein the determining of the second output characteristic further comprises:
dispensing viscous material at the second pump speed onto a weight scale;
measuring a second weight of dispensed viscous material; and
determining the second output characteristic using the second weight.
